# EUROPEAN PATENT APPLICATION

(11) **EP 1 842 983 A2**
(43) Date of publication of application: **10.10.2007**
(21) Application number: 07006850.7
(22) Date of filing: 02.04.2007
(51) Int. Cl.: E04F 15/024, H02G 3/18

(54) **Part for elevated paving, realization method and paving realized therewith**

(30) Priority: 05.04.2006 IT MI20060675
(71) Applicant: Marazzi Group S.p.A., 41100 Modena MO (IT)
(72) Inventor: Marazzi, Filippo, 41050 Colombaro (MO) (IT)
(74) Representative: Faraggiana, Vittorio

(57) **Abstract**

An elevated paving panel part (10) includes a support layer (11) and an overlying tread layer (12) coupled together firmly and in which there is a passing hole receiving a structure (15) with side wall following the wall of the hole and identifying a seat (17) through the panel for assembly of various accessories. The structure has on the side a tabbed edge (18) confined between the support layer and the tread layer.

## Description

This invention relates to a paneled part for elevated paving, a method for its realization and a paving using said panel.

In the known art, elevated paving systems made up of a framework or sub-structure with columns for resting on the ground and on which are rested panel parts forming the treading surface of the paving are well known. This allows housing services such as electrical connections, data lines, conditioning piping et cetera beneath the paving while keeping easy access there to. However, it is necessary to foresee passages in the panels and install on them accessory parts such as electrical and data outlets and the air grids, lighting parts et cetera. For this purpose where necessary, a hole on which is installed from the outside an appropriate structure is made in the panels.

But the known art suffers from some disadvantages such as the fact that the drilling and following application of the structure weakens the panel and the structure applied over the panel is not a safe anchorage while the frame of the structure serving as support on the panel creates unevenness on the floor et cetera.

The general purpose of the present invention is to remedy the above mentioned shortcomings by making available a panel for elevated paving which would firmly integrate a structure for assembly of accessories.

In view of this purpose it was sought to realize in accordance with the present invention an elevated paving panel part including a support layer and a overlying tread layer coupled together firmly and in which there is a passing hole receiving a structure with side wall following the wall of the hole and identifying a seat through the panel for assembly of accessories with the structure having on the side a tabbed edge confined between the support layer and the tread layer.

Again in accordance with the principles of this invention it was also sought to realize a method for the realization of an equipped elevated pavement panel part including the steps of realization of a support layer, a tread layer and a structure identifying a seat for assembly of accessories and having a tabbed edge laterally, and realize in the two layers a passing hole for reception of the structure and superimpose and constrain firmly the tread layer and the support layer so as to receive the structure in the passing hole confining the tabbed edge between the two layers.

Again in view of the purposes of this invention an elevated paving including a supporting structure on which are placed panel parts some of which with the above mentioned characteristics is also claimed.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a an exploded and cross-sectioned view of a panel in accordance with this invention,
FIG 2 shows a view similar to that of FIG 1 of the assembled panel,
FIG 3 shows a plan view of the panel of FIG 2,
FIGS 4 and 5 show partially cross-sectioned views of the panel of FIG 2 with different accessories received,
FIG 6 shows a view similar to that of FIG 2 of a first panel variant in accordance with this invention,
FIG 7 shows a view of the panel of FIG 6 with an adaptor received of the seat for accessories.
FIG 8 shows a plan view of a second panel variant in accordance with this invention,
FIG 9 shows a cover unit for the panel of FIG 8, and
FIGS 10 and 11 show cross-sections taken along lines X-X and XI-XI of FIG 8.

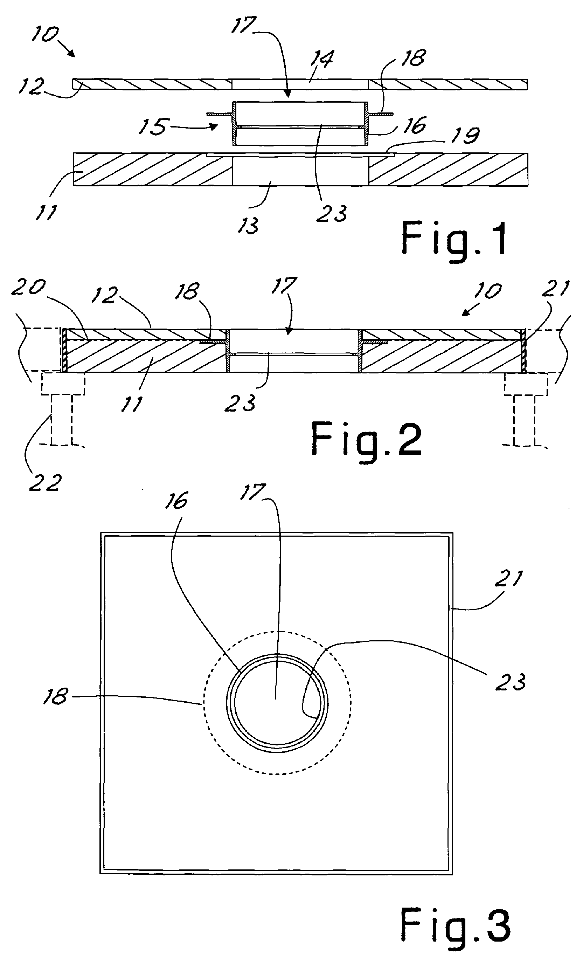

With reference to the figures, FIG 1 shows an exploded view of a first panel part realization in accordance with this invention. The panel part is designated as a whole by reference number 10 and includes a support layer 11 and an overlying tread layer 12. The support layer is realized suitable to support the loads foreseen for the paving. Advantageously this support layer is a panel in chosen material (also because of the loads) from among calcium sulphate, high-density chipboard, coupling of chipboard layer of and calcium sulphate layer or alternative materials such as bee's nest panels.

The tread layer instead is chosen in a material suited to the surface finish and the desired wear resistance.

Advantageously the tread layer is made up of a ceramic plate in a single piece or made up of the coupling of several side-by-side ceramic tiles.

In the two layers a hole 13, 14 is made for reception of a structure 15. The structure is realized with a side wall 16 which follows the wall of the hole and identifies a seat 17 through the panel for assembly of accessories. From the wall 16 a tabbed edge 18 projects laterally and is confined between the support layer and the tread layer. Advantageously the tabbed edge is received in a corresponding seat 19 made in the surface of the support layer which is interfaced with the tread layer.

FIG 2 shows the panel part completely assembled with the two layers firmly constrained together by means an interface glued layer 20. The gluing can be realized with an appropriate glue. Advantageously the constraint between the layers is obtained by gluing with injection of polyurethane in mold. To this end channeling can advantageously be made in the interface between the layers for the spreading of the polyurethane injected into the mold.

Again advantageously, the panel includes a protective peripheral edge. This prevents for example splintering during shifting and laying and in addition can realize 'flight' edging of the side-by-side panels. The edge, advantageously of plastic material, can be applied after coupling of the panels or be made directly during said possible polyurethane injection operations into the mold, realizing a monolithic block. As an alternative, the edge can also be realized with a sheet of PVC or ABS. The edge can also be realized in two parts with a first edge at the tread layer coupled to a second edge at the support layer. This allows using different materials in the two zones. For example in the tread plane zone the edge can be of colored rigid polyurethane while in the support panel zone the edge can be realized with a sheet of PVC or ABS.

FIG 2 also shows diagrammatically the realization of a pavement elevated with the panel in accordance with this invention and which includes a support structure 22 (the rest is known art and therefore not shown in detail) on which are placed the panel parts side by side to realize the unbroken pavement with some panels in desired positions equipped with the innovative structure in accordance with this invention.

As is seen well in FIG 2 the peripheral side wall 16 of the structure is advantageously extended for the entire hole in the panel and with at least the upper edge level with the tread floor. The tab 18 is in intermediate position between the lower and upper end edges of the wall. On the inner face of the wall is a circumferential support rib 23 directed inward so as to identify a support plane for the accessories to be inserted in the structure with possible interposition of adaptation parts of the seat in the structure (as clarified below).

In FIG 3 the hole is shown arranged in the center of the panel but naturally it can also be realized in an uncentered position, for example towards a corner of the panel.

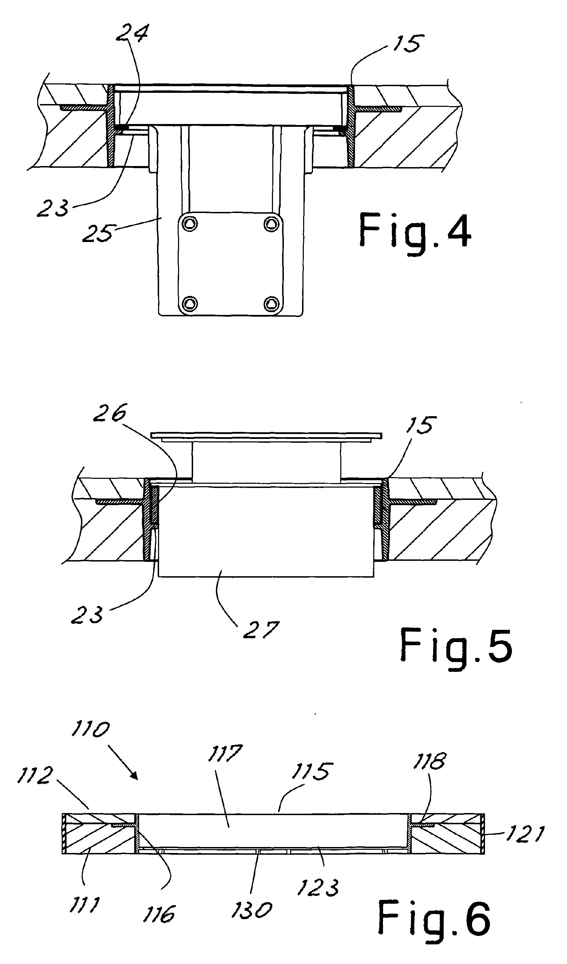

FIGS 4 and 5 show two different adaptation parts of the structure for two different types of accessory. In particular, in FIG 4 the adaptor is in thin ring form 24 extending the ribbing 23 towards the center so as to shift the support towards the center of the seat and allow support of an accessory (for example a lamp) which has the support edge of a diameter less than the hole identified by the rib.

In FIG 5 the adaptor is instead a cylindrical part 26 with wall of thickness similar to the rib 23 and height such as to shift upwards by an established amount the support floor for the accessory 37 which needs it.

The adaptors can be sized so as to allow reception of standard accessories in the seat.

FIG 6 shows a panel variant in accordance with this invention. For convenience, the same parts of the preceding variant are designated by the same numbers increased by 100. In the variant, designated generically by reference number 110, the structure 115 between the two layers 111 and 112 has a larger diameter to allow reception in the seat 117 of larger accessories. The external tab 118 is still in intermediate position along the cylindrical wall 116 while the internal support rib 123 is near the lower end of the structure. Beneath it there can be radial strengthening ribs 130.

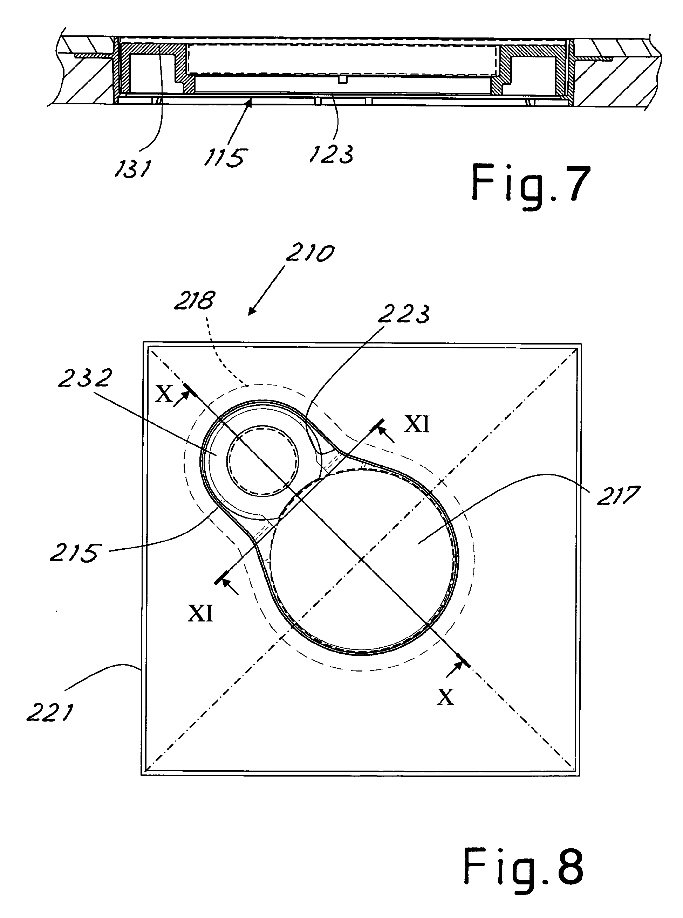

FIG 7 shows the panel 110 with an adaptor 131 for reduction of the seat. Said adaptor rests peripherally on the rib 123 and realizes both a narrowing of the seat and a raising of the support floor. The exact form of the inner face of the adaptor will depend on the particular adaptor to be received. In FIG 7 an air diffuser is shown in broken lines for example.

FIGS 8-11 show a third panel part in accordance with this invention. For convenience the same parts of the panel of the FIG are designated by the same numbers increased by 200.

As seen quite well in FIG 8, in the third variant, designated as a whole be reference number 210, the hole does not have a circular form but on the contrary is formed from two connected circular holes. In particular, the two holes have different diameters and intersect each other. The structure 215 confined with a peripheral tab 218 between the two layers 211 and 212 has a complementary form. Advantageously the centers of the two circumferences forming the structure 215 are on a diagonal of the panel with the greater circumference near the center of the panel and the other towards a corner.

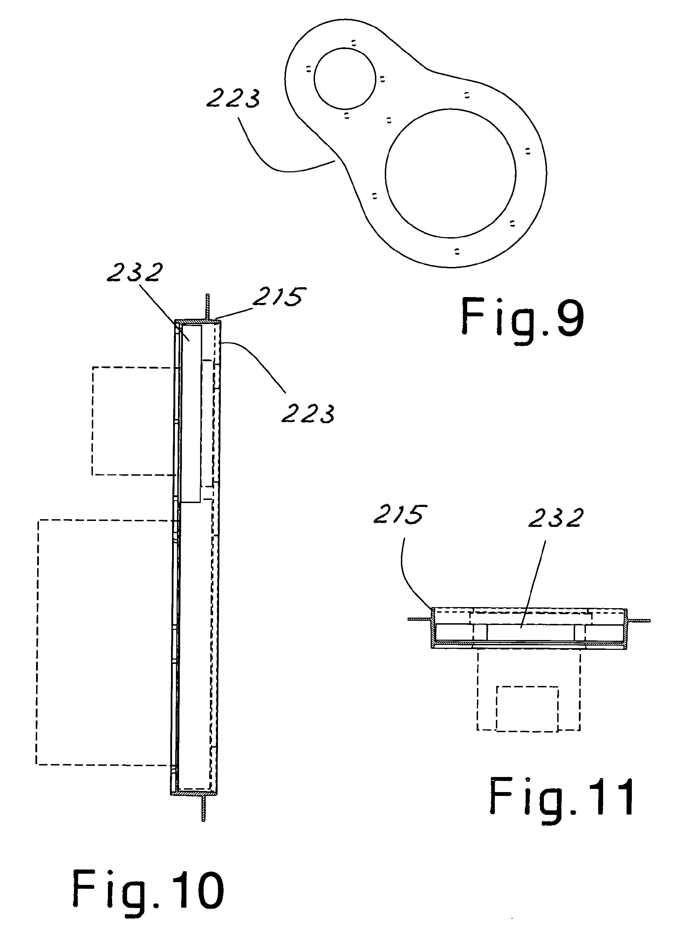

FIG 8 also shows an adapter 232 for reduction of the lesser circumference to serve as support for an accessory requiring it. As seen in the figures, said adaptor has a cut edge to not intersect the greater circumference and allow reception in it of an accessory with full diameter. In FIGS 10 and 11, examples of accessories are generally shown in broken lines. FIG 9 shows a part of a plate cover 233 formed like the seat 217 of the structure 215.

It is now clear that the preset purposes have been achieved by making available innovative parts for elevated paving panels.

Naturally the above description of an embodiment applying the innovative principles of the present invention is given by way of non-limiting example of said principles within the scope of the exclusive right claimed here.

## Claims

1. Elevated paving panel part including a support layer and an overlying tread layer coupled together firmly and in which there is a passing hole receiving a structure with side wall following the wall of the hole and identifying a seat through the panel for assembly of accessories with the structure having on the side a tabbed edge confined between the support layer and the tread layer.

2. Part in accordance with claim 1 **characterized in that** the peripheral side wall extends in the hole and with on the external face said tabbed edge and on the internal face a circumferential rib for direct inward support.

3. Part in accordance with claim 2 **characterized in that** the rib is a supporting stop for accessories with possible interposition of adaptation parts of the seat in the structure.

4. Part in accordance with claim 1 **characterized in that** the tabbed edge is received in a corresponding seat made in the interface surface of the support layer.

5. Part in accordance with claim 1 **characterized in that** the top edge of the structure is level with the external surface of the tread layer.

6. Part in accordance with claim 1 **characterized in that** the passing hole is made up of two connected circular holes.

7. Part in accordance with claim 6 **characterized in that** the two round holes have different diameters.

8. Part in accordance with claim 7 **characterized in that** the two holes intersect.

9. Part in accordance with claim 7 **characterized in that** the centers of the two circumferences forming the structure received in the intersecting holes are on a diagonal of the panel with the larger circumference near the center of the panel and the other toward a corner.

10. Part in accordance with claim 1 **characterized in that** the support layer is a panel of material chosen among calcium sulphate, high-density chipboard, coupling of chipboard layer and calcium sulphate layer or bee's nest panel.

11. Part in accordance with claim 1 **characterized in that** the tread layer is formed of a ceramic plate.

12. Part in accordance with claim 11 **characterized in that** the ceramic plate is formed by the coupling of several ceramic tiles side by side.

13. Part in accordance with claim 11 **characterized in that** it includes a protective peripheral edge.

14. Part in accordance with claim 13 **characterized in that** the protective edge is made up of a first edge at the tread layer coupled with a second edge at the support layer.

15. Part in accordance with claim 13 **characterized in that** the protective edge is of plastic material.

16. Part in accordance with claim 1 **characterized in that** the two layers are glued together.

17. Part in accordance with claim 1 **characterized in that** it includes a cover part for the seat in the structure.

18. Part in accordance with claim 1 **characterized in that** it includes annular parts for adaptation of the seat which rest on at least one projection in the structure part to move towards the center and/or upward in the seat the plane for support of accessories to be inserted therein.

19. Method for realization of an equipped elevated paving panel part including the following steps:
- realization of a support layer, a tread layer and a structure identifying a seat for assembly of accessories and having laterally a tabbed edge,
- realization in the two layers of a passing hole for reception of the structure, and
- place above and constrain firmly tread layer and support layer to receive the structure in the passing hole to confine the tabbed edge between the two layers.

20. Method in accordance with claim 19 in which the constraint among the layers is obtained by gluing with injection of polyurethane into a mold.

21. Method in accordance with claim 19 in which before laying the two sheets one upon the other, a seat is made in the surface of the support layer to receive the tabbed edge.

22. Method in accordance with claim 19 in which there is another step of applying a peripheral edge for protection of the panel.

23. Elevated paving including a support structure on which are placed panel parts some of which are realized in accordance with any one of the above claims.
